# EUROPEAN PATENT SPECIFICATION

(11) **EP 2 220 802 B1**
(45) Date of publication and mention of the grant of the patent: **21.02.2018**
(21) Application number: 08864759.9
(22) Date of filing: 24.10.2008
(51) Int. Cl.: H04L 1/00

(54) **CONTROL OF UP LINK COMMON E-DCH TRANSMISSION**
STEUERUNG DER ÜBERTRAGUNG DES GEMEINSAMEN E-DCH DER AUFWÄRTSSTRECKE
COMMANDE DE TRANSMISSION E-DCH COMMUN EN LIAISON ASCENDANTE

(30) Priority: 20.12.2007 US 15308 P
(43) Date of publication of application: 25.08.2010
(60) Divisional application: 13155937.9
(73) Proprietor: Telefonaktiebolaget LM Ericsson (publ), 164 83 Stockholm (SE)
(72) Inventor: WAGER, Stefan, 02360 Espoo (FI)
(74) Representative: Ericsson
(86) International application number: PCT/SE2008/051212
(87) International publication number: WO 2009/082330

(56) References cited:
- EP-A- 1 235 402
- WO-A-2004/004194
- NOKIA CORPORATION ET AL: "Contention Resolution with MAC-e" 3RD GENERATION PARTNERSHIP PROJECT (3GPP), [Online] 29 October 2007 (2007-10-29), XP050137157 MOBILE COMPETENCE CENTRE ; 650, ROUTE DES LUCIOLES ; F-06921 SOPHIA-ANTIPOLIS CEDEX ; FRANCE Retrieved from the Internet: URL:http:\\www.3gpp.org\ftp\tsg_ran\WG2_RL 2\TSGR2_60\Docs\r2-074624.zip>
- ERICSSON: "Contention resolution for enhanced uplink in CELL_FACH" 3RD GENERATION PARTNERSHIP PROJECT (3GPP), [Online] 7 January 2008 (2008-01-07), XP050137943 MOBILE COMPETENCE CENTRE ; 650, ROUTE DES LUCIOLES ; F-06921 SOPHIA-ANTIPOLIS CEDEX ; FRANCE Retrieved from the Internet: URL:http:\\www.3gpp.org\ftp\tsg_ran\WG2_RL 2\TSGR2_60bis\Docs\R2-080043.zip>
- NOKIA CORPORATION ET AL: "On Collision Detection and Error Avoidance" 3RD GENERATION PARTNERSHIP PROJECT (3GPP), [Online] 4 February 2008 (2008-02-04), XP050138786 MOBILE COMPETENCE CENTRE ; 650, ROUTE DES LUCIOLES ; F-06921 SOPHIA-ANTIPOLIS CEDEX ; FRANCE Retrieved from the Internet: URL:http:\\www.3gpp.org\ftp\tsg_ran\tsg_ra n\WG2_RL2\TSGR2_61\Docs\r2-080992.zip>

## Description

### TECHNICAL FIELD

The present invention relates to a method and system for managing transmission of Up Link common E-DCH transmissions in a radio system such as a Wide Band Code Division Multiple Access (WCDMA) radio system.

### BACKGROUND

In release 8 of the third generation partnership project (3GPP), work is ongoing to improve the uplink performance in the so called CELL_FACH state. CELL_FACH is a Radio Resource Control (RRC) state in which the User Equipment (UE) is known on cell level (i.e. has a cell id), has a layer 2 connection but no dedicated physical layer resource associated therewith. Instead, common physical layer resources are shared between different User Equipments in the CELL_FACH state.

One uplink improvement planned for future cellular radio systems is the activation also in CELL_FACH of the Enhanced Dedicated Channel (E-DCH) physical channel, which is normally used as a dedicated physical layer channel in CELL_DCH state with one separate E-DCH resource allocated per user. This can be performed by using a pool of E-DCH resources that can be temporarily assigned to a user in the CELL_FACH state. Such a pool of E-DCH resources can be termed common E-DCH resources. E-DCH resources are conventionally managed by a Radio Network Controller (RNC). However the pool of common E-DCH resources is to be managed by the radio base station NodeB to speed up the allocation of resources by not having to involve the RNC in the allocation procedure. The common E-DCH configurations are broadcasted to UEs located in a cell.

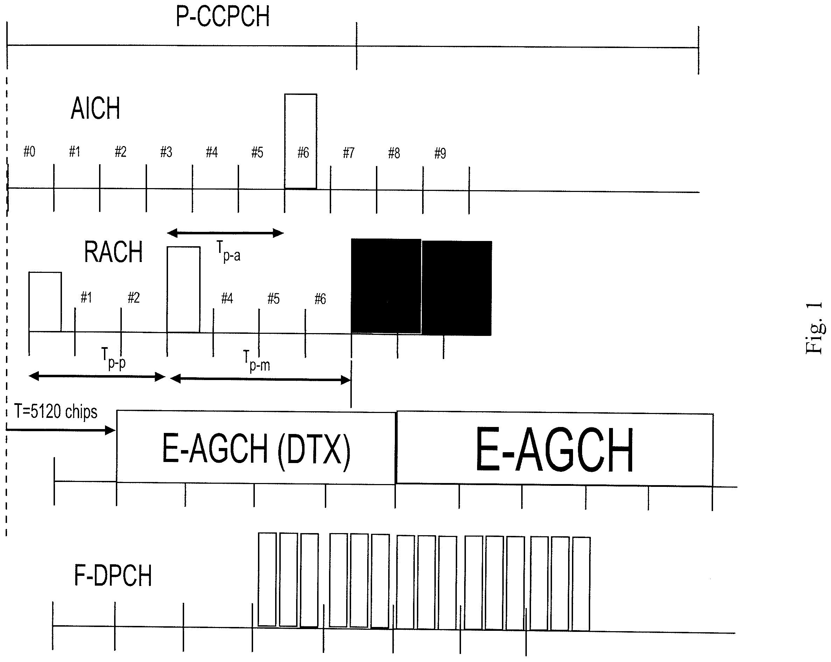

In Fig. 1 common E-DCH transmission in CELL_FACH state is shown. The procedure to access the common E-DCH channel in CELL_FACH starts in a manner corresponding to Rel-99 Random Access Channel (RACH) transmission, with preamble power ramping using randomly selected preamble signatures. Having detected the preamble, the NodeB acknowledges reception using an Acquisition Indication Channel (AICH) sequence. It also informs the UE which common E-DCH resource it has assigned to the UE.

A common E-DCH resource is defined by:
an Up -Link (UL) scrambling code
an E-DCH Radio Network Temporary Identifier (E-RNTI)
a Fractional - Dedicated Physical CHannel (F-DPCH) code and timing offset E-DCH Absolute Grant Channel (E-AGCH)/ E-DCH Relative Grant Channel (E-RGCH)/ E-DCH HARQ Acknowledgement Indicator CHannel (E-HICH) codes and signatures, and High Speed Dedicated Physical Control Channel (HS-DPCCH) parameters such as power offsets and Channel Quality Indicator (CQI).

One characteristic of the common E-DCH transmission is that at the point the base station NodeB assigns the common E-DCH resources and starts receiving the Up Link (UL) E-DCH transmission, it is not aware of the identity of the UE. As a result. two users selecting the same preamble in the same access slot will cause a collision. There are 16 preambles to choose from and 15 access slots during 20 ms to choose from. If two users transmit the same preamble in the same access slot, and the base station NodeB acknowledges one of them on AICH, both UEs will start Up Link transmission. This will lead to non-optimal operation as both are transmitting, but the base station NodeB will only be able to decode one User Equipment or nothing of what is being transmitted.

To solve this problem, UEs having a RRC connection will put their Radio Network Temporary Identifier (RNTI) in the MAC header on the common E-DCH. This will enable the NodeB to read the RNTI and thus uniquely identify the user transmitting. The NodeB then echoes the detected RNTI back to on a downlink control channel. Both transmitting UEs will read the RNTI, but only the one detecting its own RNTI will continue the Up Link common E-DCH transmission, see also "Contention resolution with MAC-e" 3RD GENERATION PARTNERSHIP PROJECT (3GPP), [Online] 29 October 2007 (2007-10-29), XP050137157.

A problem with the above solution is that it only works for UEs having an RRC connection. Users entering the system from idle state will need special attention. One solution that could be envisaged is to use a Core Network Identifier for these users. However, that would increase protocol overhead, and also complexity as protocols have to support both radio network and core network identifiers for contention resolution.

Hence there is a need for an improved method and system for managing transmission of Up Link common E-DCH transmissions.

### SUMMARY

It is an object of the present invention to provide an improved method and system for managing of Up Link common E-DCH transmissions.

This object and others are obtained by the methods and radio system nodes as set out in the appended claims. Thus, by adding a checksum to each layer 3 message to check the correctness of the message, the risk that Layer 2 assembles message parts from different UEs into one corrupt message, such as a RRC or CN message that is then delivered to higher layers is avoided.

The inventors have recognized that for users in an idle state, the common E-DCH transmission is used to transmit only initial RRC and possibly initial CN messages. This transmission typically only lasts for a very short time. It has been observed to typically last for <100 ms, after which the common E-DCH resource is again released. Also the probability of preamble collision is expected to be very low, in the order of 10⁻³, i.e. typically less than one on one thousand.

A result from the above observations can be that since collisions will be with a low probability and only during a limited time, contention resolution may not be necessary for users in idle state from a physical layer point of view. However, colliding transmissions can still cause problems on higher layers, as assembly of Radio Resource Control (RRC) and Non Access Stratum (NAS) messages on Layer 2 (L2) may fail. There is a risk that Layer 2 assembles parts from different UEs into one corrupt message, such as a Radio Resource Control (RRC) or Core Network (CN) message that is then delivered to higher layers. This may cause unexpected effects as higher layers start to process the messages. Such a problem needs to be avoided. To solve this problem, a checksum to each Layer 3 (L3) message, e.g. (RRC or NAS) is added to check the correctness of the message.

Hereby the need for transmitting a long Core Network (CN) Identity (ID) for contention resolution on Layer 2 for UEs in idle mode is removed. As a result performance of the cellular radio network will be improved.

### BRIEF DESCRIPTION OF THE DRAWINGS

The present invention will now be described in more detail by way of non-limiting examples and with reference to the accompanying drawings, in which:
- Fig. 1 is a view illustrating common E-DCH transmission in CELL_FACH state,
- Fig. 2 is a general view of a cellular radio system,
- Fig. 3 is a view illustrating different message from different UEs assembled into one corrupt message on Level 2 that is then delivered to higher layers,
- Figs. 4a - 4c are views of a header of a Level 3 message in accordance with some exemplary embodiments of the present invention, and
- Fig. 5 is a flowchart illustrating steps performed when adding a checksum to a level 3 message.

### DETAILED DESCRIPTION

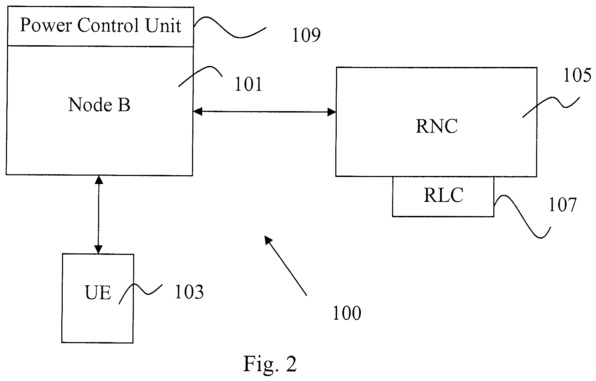

In Fig. 2 a general view of a WCDMA system 100 is depicted. The system 100 comprises a base station (Node B) 101. The base station 101 serves a number of mobile terminals, usually termed User Equipment (UE) 103, located within the area covered by the base station 101. The base station 101 is also connected to a radio network controller node (RNC) 105. The RNC 105 typically also includes a Radio link controller node (RLC) 107. The RLC 107 is among other things responsible for detecting errors. The system 100 also typically comprises a power control unit 109, which preferably is co-located or an integral part of the base station 101.

In release 6, the WCDMA specification is extended with a new uplink transport channel, the Enhanced Dedicated Channel (E-DCH). The enhanced uplink (EUL) is a natural complement to High Speed Downlink Packet Access (HSDPA) for high-performance packet-data applications.

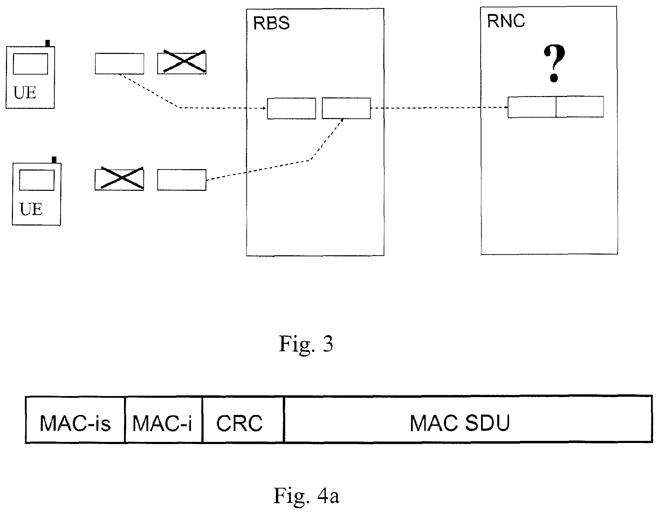

In Fig. 3 colliding transmissions from two different User Equipments in idle state is illustrated. Colliding transmissions from different UEs can cause problems on higher layers, as assembly of Radio Resource Control (RRC) and Non Access Stratum (NAS) messages on Layer 2 (L2) may fail. Hence there is a risk that Layer 2 assembles parts from different UEs into one corrupt message, such as a Radio Resource Control (RRC) or a Core Network (CN) message that is then delivered to higher layers. This may cause unexpected effects as higher layers start to process the messages. Such a problem therefore needs to be avoided. To solve this problem, a checksum to each Layer 3 (L3) message, e.g. RRC or NAS is added to check the correctness of the message.

In accordance with the present invention a checksum is added to each layer 3 message to check the correctness of the message when common E-DCH transmission are transmitted when the radio base station is not aware of the identity of the UE. For WCDMA, this applies to uplink transmission on the Common Control Channel (CCCH) logical channel. Hereby it can be prevented that colliding transmissions from different UEs on the common E-DCH channel can cause problems on higher layers.

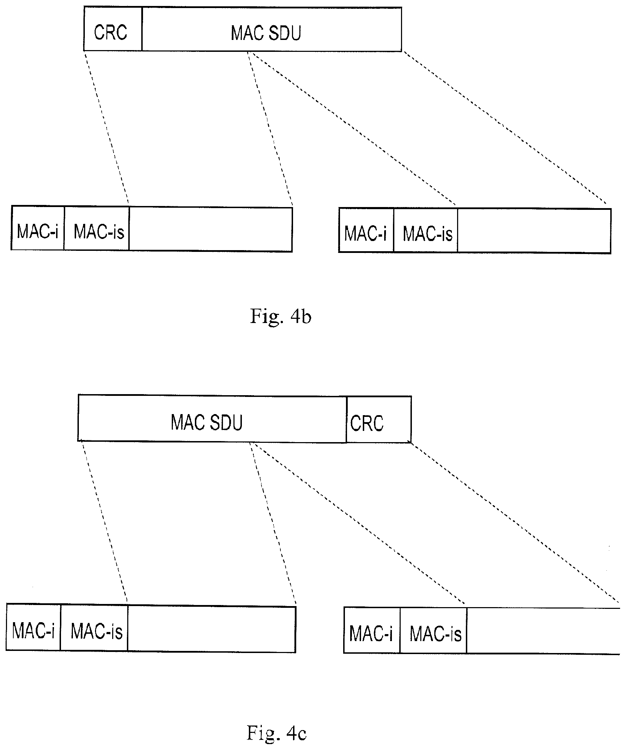

There are a few different options on how to append the checksum to a message such as a Radio Resource Control (RRC) or Non Access Stratum (NAS) message. The checksum can be on Media Access Control (MAC), Radio Link Control (RLC) or Radio Resource Control (RRC). Adding the checksum on MAC has the benefit that an error in the reassembly can be detected already in the base station, and thus the corrupt message does not need to be transmitted up to the RNC. In 3GPP Rel-8, MAC segmentation is included to support flexible RLC sizes. In accordance with one embodiment a similar MAC header structure as for the downlink MAC-ehs is used. For example the MAC can be split in two sublayers, called MAC-i and MAC-is. The segmentation and reassembly functionality is handled by the MAC-is sublayer, terminated in the C-RNC. The checksum can in accordance with one embodiment be a 16 bit Cyclic Redundancy Checksum (CRC) calculated over the MAC SDU. The Checksum can also be calculated over another unit such as a MAC-c PDU. In Fig. 4a an exemplary location of a checksum is depicted. In Fig. 4a the checksum is located after the fields of MAC-i and MAC-is and before the MAC SDU in the MAC header for Common Control Channel (CCCH). Other locations are also possible such as depicted in Fig. 4b and Fig. 4c. These show the two possible alternatives for CRC location in case the MAC SDU is segmented before transmission over the radio interface. In this case there are one MAC-i and one MAC-is header for each segment. In the MAC receiver, the MAC-i and MAC-is headers are first removed and the MAC SDU assembled. Then the CRC is calculated and checked with the appended CRC bits.

If MAC segmentation is not available, the checksum can be added on either RLC level or RRC level, in which case the processing of the checksum can be performed by the RNC, thereby easing the load on the Radio Base Station (RBS).

In accordance with one embodiment the checksum can be a 16 or 24 bit Cyclic Redundancy Check (CRC) or any other suitable number of bits. In case the checksum is transmitted on the RRC level, it is be possible to use the Integrity Protection checksum calculated with a default HFN and User ID.

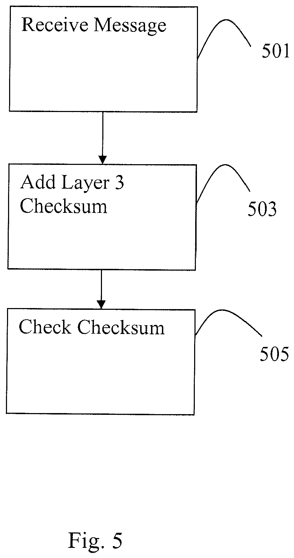

In Fig. 5 a flowchart illustrating steps performed when forming and receiving a message on level 2 when receiving messages from at least one User Equipment in idle state is shown. Because two users can select the same preamble in the same access slot thereby causing a collision, there is a risk that Layer 2 assembles messages from different users. To enable identification of such erroneously assembled messages a checksum is added to each MAC SDU in a step 501 in each User Equipment. Then, in a step 503 messages from at least one User Equipment is received as a common E-DCH transmission. Thereupon, in a step 505, the checksum is checked to determine the correctness of the message. The determination in step 505 can be performed either locally in the radio base station NodeB or in the Radio Network Controller (RNC).

Using the method and system as described herein will remove the need for transmitting a long Core Network (CN) Identity (ID) for contention resolution on Layer 2 for UEs in idle mode. As a result performance of the cellular radio network will be improved.

## Claims

1. A method to be carried out in a User Equipment UE for use in a Wide Band Code Division Multiple Access, WCDMA, radio system for enabling detection of an error in a message formed by layer 2 from a number of assembled messages generated by at least one User Equipment UE in an idle state and transmitted as a common transmission on an enhanced Dedicated Channel, E-DCH, **characterized by** the step of:
- adding (503) a checksum to a Layer 3 message to enable detection if layer 2 assembles message parts from different UEs into one corrupt message.

2. The method according to claim 1, wherein the checksum is appended to a Non Access Stratum, NAS, message.

3. The method according to claim 1, wherein the checksum is appended to a Radio Resource Control, RRC, message.

4. The method according to any of claims 2 or 3, wherein the checksum is added in the Media Access Control, MAC, header.

5. The method according to any of claims 2 - 4, wherein the checksum is appended to the beginning or the end of a MAC-c Packet Data Unit, PDU

6. A method, to be carried out in a radio network controller, or radio base station, comprised in a Wide Band Code Division Multiple Access, WCDMA, radio system, for detecting an error in a message formed by layer 2 from a number of assembled messages generated by at least one User Equipment UE in an idle state and transmitted as a common transmission on an enhanced Dedicated Channel, E-DCH, **characterized by** the step of:
- receiving a Layer 3 message comprising a checksum, and
- checking the correctness of the assembled message based on the checksum.

7. The method according to claim 6, wherein the checksum is appended to a Non Access Stratum, NAS, message.

8. The method according to claim 6, wherein the checksum is appended to a Radio Resource Control, RRC, message.

9. The method according to any of claims 7 or 8, wherein the checksum is located in the Media Access Control, MAC, header.

10. The method according to any of claims 7 -9, wherein the checksum is appended to the beginning or the end of a MAC-c Packet Data Unit, PDU.

11. An apparatus, being a radio base station (101) or a radio network controller, for use in a Wide Band Code Division Multiple Access, WCDMA, radio system, said radio network controller, or means (101) comprised in the radio base station (101), being adapted to detect an error in a message formed by layer 2 from a number of assembled messages generated by at least one User Equipment UE in an idle state and transmitted as a common transmission on an enhanced Dedicated Channel, E-DCH **characterized by:**
- means for receiving a Layer 3 message comprising a checksum, and
- means for checking the correctness of the assembled message based on the checksum.

12. A User Equipment UE for use in a in a Wide Band Code Division Multiple Access, WCDMA, radio system and adapted to transmit a message formed by a number of assembled layer 2 when the User Equipment UE is in an idle state and transmitted as a common transmission on an enhanced Dedicated Channel, E-DCH, **characterized by** the step of:
- adding (503) a checksum to a Layer 3 message to enable detection if layer 2 assembles message parts from different UEs into one corrupt message..

13. The User Equipment according to claim 12, further comprising means for appending the checksum to a Non Access Stratum, NAS, message.

14. The User Equipment according to any of claims 12 - 13, further comprising means for appending the checksum to a Radio Resource Control, RRC, message.

15. The User Equipment according to any of claims 12 - 14, comprising means for adding the checksum in the Media Access Control, MAC, header.

16. The User Equipment according to claim 15, comprising means for appending the checksum to the beginning or the end of a MAC-c Packet Data Unit, PDU.

## Patentansprüche

1. Verfahren, das in einer Benutzereinrichtung UE durchzuführen ist, zur Verwendung in einem Wide Band Code Division Multiple Access-, WCDMA-, Funksystem zum Ermöglichen von Erkennung eines Fehler in einer Nachricht, die durch Schicht 2 aus einer Anzahl von zusammengesetzten Nachrichten, erzeugt durch zumindest eine Benutzereinrichtung UE in einem Leerlaufzustand und übertragen als eine allgemeine Übertragung auf einem erweiterten dedizierten Kanal, E-DCH, gebildet ist, **gekennzeichnet durch** die folgenden Schritte:
- Hinzufügen (503) einer Prüfsumme zu einer Schicht-3-Nachricht, um Erkennung zu ermöglichen, ob Schicht 2 Nachrichtenteile von verschiedenen UEs in einer fehlerhaften Nachricht zusammenfügt.

2. Verfahren nach Anspruch 1, wobei die Prüfsumme an eine Non Access Stratum-, NAS-, Nachricht angehängt ist.

3. Verfahren nach Anspruch 1, wobei die Prüfsumme an eine Radio Resource Control-, RRC-, Nachricht angehängt ist.

4. Verfahren nach einem der Ansprüche 2 oder 3, wobei die Prüfsumme in dem Media Access Control-, MAC-, Header hinzugefügt ist.

5. Verfahren nach einem der Ansprüche 2-4, wobei die Prüfsumme am Anfang oder am Ende einer MAC-c Packet Data Unit, PDU, angehängt ist.

6. Verfahren, das in einer Funknetzsteuerung oder Funkbasisstation durchzuführen ist, umfasst in einem Wide Band Code Division Multiple Access-, WCDMA-, Funksystem, zum Erfassen eines Fehlers in einer Nachricht, die durch Schicht 2 aus einer Anzahl von zusammengesetzten Nachrichten, erzeugt durch zumindest eine Benutzereinrichtung UE in einem Leerlaufzustand und übertragen als eine allgemeine Übertragung auf einem erweiterten dedizierten Kanal, E-DCH, gebildet ist, **gekennzeichnet durch** die folgenden Schritte:
- Empfangen einer Schicht-3-Nachricht, umfassend eine Prüfsumme, und
- Prüfen der Korrektheit der zusammengesetzten Nachricht auf Grundlage der Prüfsumme.

7. Verfahren nach Anspruch 6, wobei die Prüfsumme an eine Non Access Stratum-, NAS-, Nachricht angehängt ist.

8. Verfahren nach Anspruch 6, wobei die Prüfsumme an eine Radio Resource Control-, RRC-, Nachricht angehängt ist.

9. Verfahren nach einem der Ansprüche 7 oder 8, wobei sich die Prüfsumme in dem Media Access Control-, MAC-, Header befindet.

10. Verfahren nach einem der Ansprüche 7-9, wobei die Prüfsumme am Anfang oder am Ende einer MAC-c Packet Data Unit, PDU, angehängt ist.

11. Vorrichtung, die eine Funkbasisstation (101) oder eine Funknetzsteuerung ist, zur Verwendung in einem Wide Band Code Division Multiple Access-, WCDMA-, Funksystem, wobei die Funknetzsteuerung oder Mittel (101), die in der Funkbasisstation (101) umfasst sind, dazu angepasst sind, einen Fehler in einer Nachricht zu erkennen, die durch Schicht 2 aus einer Anzahl von zusammengesetzten Nachrichten, erzeugt durch zumindest eine Benutzereinrichtung UE in einem Leerlaufzustand und übertragen als eine allgemeine Übertragung auf einem erweiterten dedizierten Kanal, E-DCH, gebildet ist, **gekennzeichnet durch**:
- Mittel zum Empfangen einer Schicht-3-Nachricht, umfassend eine Prüfsumme, und
- Mittel zum Prüfen der Korrektheit der zusammengesetzten Nachricht auf Grundlage der Prüfsumme.

12. Benutzereinrichtung UE zur Verwendung in einem Wide Band Code Division Multiple Access-, WCDMA-, Funksystem und angepasst daran, eine Nachricht zu übertragen, die durch eine Anzahl von zusammengesetzter Schicht 2, wenn die Benutzereinrichtung UE in einem Leerlaufzustand ist, und übertragen als eine allgemeine Übertragung auf einem erweiterten dedizierten Kanal, E-DCH, gebildet ist, **gekennzeichnet durch** den folgenden Schritt:
- Hinzufügen (503) einer Prüfsumme zu einer Schicht-3-Nachricht, um Erkennung zu ermöglichen, wenn Schicht 2 Nachrichtenteile von verschiedenen UEs in einer fehlerhaften Nachricht zusammenfügt.

13. Benutzereinrichtung nach Anspruch 12, ferner umfassend Mittel zum Anhängen der Prüfsumme an eine Non Access Stratum-, NAS-, Nachricht.

14. Benutzereinrichtung nach einem der Ansprüche 12-13, ferner umfassend Mittel zum Anhängen der Prüfsumme an eine Radio Resource Control-, RRC-, Nachricht.

15. Benutzereinrichtung nach einem der Ansprüche 12-14, umfassend Mittel zum Hinzufügen der Prüfsumme in dem Media Access Control-, MAC-, Header.

16. Benutzereinrichtung nach Anspruch 15, umfassend Mittel zum Anhängen der Prüfsumme am Anfang oder am Ende einer MAC-c Packet Data Unit, PDU.

## Revendications

1. Procédé à exécuter dans un équipement utilisateur UE pour l'utilisation dans un système radio d'accès multiple par répartition de code à large bande, WCDMA, pour permettre la détection d'une erreur dans un message formé par une couche 2 à partir d'un nombre de messages assemblés générés par au moins un équipement utilisateur UE dans un état inactif et transmis comme une transmission commune sur un canal dédié amélioré, E-DCH, **caractérisé par** l'étape suivante :
- l'ajout (503) d'une somme de contrôle à un message de couche 3 pour permettre la détection du fait qu'une couche 2 assemble des parties de message provenant de différents UE dans un message corrompu.

2. Procédé selon la revendication 1, dans lequel la somme de contrôle est annexée à un message de couche non d'accès, NAS.

3. Procédé selon la revendication 1, dans lequel la somme de contrôle est annexée à un message de contrôle de ressources radio, RRC.

4. Procédé selon l'une quelconque des revendications 2 ou 3, dans lequel la somme de contrôle est ajoutée dans l'en-tête de contrôle d'accès au support, MAC.

5. Procédé selon l'une quelconque des revendications 2 à 4, dans lequel la somme de contrôle est annexée au début ou à la fin d'une unité de données de paquet, PDU, MAC-c.

6. Procédé à exécuter dans un contrôleur de réseau radio ou une station de base radio, compris dans un système radio d'accès multiple par répartition de code à large bande, WCDMA, pour détecter une erreur dans un message formé par une couche 2 à partir d'un nombre de messages assemblés générés par au moins un équipement utilisateur UE dans un état inactif et transmis comme une transmission commune sur un canal dédié amélioré, E-DCH, **caractérisé par** l'étape suivante :
- la réception d'un message de couche 3 comprenant une somme de contrôle, et
- la vérification de l'exactitude du message assemblé sur la base de la somme de contrôle.

7. Procédé selon la revendication 6, dans lequel la somme de contrôle est annexée à un message de couche non d'accès, NAS.

8. Procédé selon la revendication 6, dans lequel la somme de contrôle est annexée à un message de contrôle de ressources radio, RRC.

9. Procédé selon l'une quelconque des revendications 7 ou 8, dans lequel la somme de contrôle est située dans l'en-tête de contrôle d'accès au support, MAC.

10. Procédé selon l'une quelconque des revendications 7 à 9, dans lequel la somme de contrôle est annexée au début ou à la fin d'une unité de données de paquet, PDU, MAC-c.

11. Appareil, qui est une station de base radio (101) ou un contrôleur de réseau radio, pour l'utilisation dans un système radio d'accès multiple par répartition de code à large bande, WCDMA, ledit contrôleur de réseau radio, ou un moyen (101) compris dans la station de base radio (101), étant adapté pour détecter une erreur dans un message formé par une couche 2 à partir d'un nombre de messages assemblés générés par au moins un équipement utilisateur UE dans un état inactif et transmis comme une transmission commune sur un canal dédié amélioré, E-DCH, **caractérisé par** :
- des moyens pour recevoir un message de couche 3 comprenant une somme de contrôle, et
- des moyens pour vérifier l'exactitude du message assemblé sur la base de la somme de contrôle.

12. Équipement utilisateur UE pour l'utilisation dans un système radio d'accès multiple par répartition de code à large bande, WCDMA, et adapté pour transmettre un message formé par un nombre d'une couche 2 assemblée quand l'équipement utilisateur UE est dans un état inactif et transmis comme une transmission commune sur un canal dédié amélioré, E-DCH, **caractérisé par** l'étape suivante :
- l'ajout (503) d'une somme de contrôle à un message de couche 3 pour permettre la détection du fait qu'une couche 2 assemble des parties de message provenant de différents UE dans un message corrompu.

13. Équipement utilisateur selon la revendication 12, comprenant en outre des moyens pour annexer la somme de contrôle à un message de couche non d'accès, NAS.

14. Équipement utilisateur selon l'une quelconque des revendications 12 à 13, comprenant en outre des moyens pour annexer la somme de contrôle à un message de contrôle de ressources radio, RRC.

15. Équipement utilisateur selon l'une quelconque des revendications 12 à 14, comprenant des moyens pour ajouter la somme de contrôle dans l'en-tête de contrôle d'accès au support, MAC.

16. Équipement utilisateur selon la revendication 15, comprenant des moyens pour annexer la somme de contrôle au début ou à la fin d'une unité de données de paquet, PDU, MAC-c.
